# EUROPÄISCHE PATENTSCHRIFT

(11) **EP 3 394 839 B1**
(45) Veröffentlichungstag und Bekanntmachung des Hinweises auf die Patenterteilung: **28.09.2022**
(21) Anmeldenummer: 16822971.4
(22) Anmeldetag: 19.12.2016
(51) Int. Cl.: G07C 9/00, G07C 9/27, H04W 12/08, H04W 4/80

(54) **ZUGANGSSYSTEM MIT ERSATZ-/AUSWEICHFUNKTION**
ACCESS SYSTEM USING A REPLACEMENT/AVOIDANCE FUNCTION
SYSTÈME D'ACCÉS AYANT UNE FONCTION DE REMPLACEMENT /ASSISTANCE

(30) Priorität: 23.12.2015 EP 15202543
(43) Veröffentlichungstag der Anmeldung: 31.10.2018
(73) Patentinhaber: INVENTIO AG, 6052 Hergiswil (CH)
(72) Erfinder: TROESCH, Florian, 8045 Zürich (CH)
(74) Vertreter: Inventio AG
(86) Internationale Anmeldenummer: PCT/EP2016/081799
(87) Internationale Veröffentlichungsnummer: WO 2017/108719

(56) Entgegenhaltungen:
- EP-A1- 2 779 118

## Beschreibung

Die hier beschriebene Technologie betrifft allgemein die Kontrolle von Zugängen. Ausführungsbeispiele der Technologie betreffen insbesondere ein Verfahren und ein System zum Betreiben eines Zugangskontrollsystems, um an Zugangspunkten nur berechtigten Personen Einlass zu gewähren

In bekannten beispielhaften Zugangskontrollsystemen sind Türen mit elektronischen Türschlössern ausgestattet. WO 2013/177443 beschreibt beispielsweise ein elektronisches Türschloss mit einer Eingabeeinrichtung, die eine Tastatur, einen Kartenleser oder ein Lesegerät zum Erfassen von biometrischen Parametern umfasst. Die Eingabeeinrichtung erfasst Daten einer Person, um deren Zugangsberechtigung zu überprüfen. Das Türschloss hat ausserdem eine Steuereinrichtung, die eine Manipulation oder Beschädigung erkennt und daraufhin einen Alarm auslöst, entweder lokal am Türschloss oder an einer entfernt angeordneten Kontrolleinrichtung.

Auch WO 2014/186691 beschreibt ein elektronisches Türschloss, das beispielsweise mittels einer Magnetkarte, einer RFID Karte oder eines Lesegerätes zum Erfassen von biometrischen Daten entriegelt werden kann. Zusätzlich dazu beschreibt WO 2014/186691 eine Vorrichtung zum Übertragen von elektrischer Energie an das elektrische Türschloss, um dadurch eine Alternative zu Batterien mit begrenzter Lebensdauer zu schaffen.

WO 2013/177443 und WO 2014/186691 beschreiben unterschiedliche Lösungen, um die Verfügbarkeit und Funktionsfähigkeit eines elektronischen Türschlosses zu verbessern. EP 2 779 118 A1 beschreibt eine weitere Lösung, nämlich eine adaptive Zugangskontrolle für Gebiete mit mehreren Türen.

Trotz dieser bekannten Lösungen, kann es Situationen geben, in denen die Verfügbarkeit und Funktionalität weder durch einen Alarm noch durch die verbesserte Stromversorgung gewährleistet werden kann. Es besteht daher Bedarf an einer zusätzlichen Technologie, um die Verfügbarkeit und Funktionalität eines Zugangskontrollsystems zu verbessern.

Ein Aspekt einer solchen Technologie betrifft daher ein Verfahren nach Anspruch 1 zum Betreiben eines Systems zur Kontrolle von Zugängen, das eine Vielzahl von Zugangskontrolleinheiten umfasst. Jedem Zugang ist eine Zugangskontrolleinheit mit einer ihr zugeordneten Datenerfassungseinrichtung zugewiesen, und die Zugangskontrolleinheiten sind über ein Netzwerk an eine Steuereinrichtung gekoppelt. Das Verfahren umfasst ein Ermitteln eines Fehlersignals durch die Steuereinrichtung, wobei das Fehlersignal anzeigt, dass eine erste Datenerfassungseinrichtung an einem ersten Zugang nicht betriebsbereit ist und keine Berechtigungsdaten einer am ersten Zugang Zutritt wünschenden Person erfassen kann. Das Verfahren umfasst ausserdem ein Empfangen eines Datensignals durch die Steuereinrichtung, wobei das Datensignal von einer zweiten Datenerfassungseinrichtung an einem zweiten Zugang erzeugt wird, wenn die zweite Datenerfassungseinrichtung die Berechtigungsdaten der am ersten Zugang Zutritt wünschenden Person erfasst. Das Verfahren umfasst weiterhin ein Senden eines Aktivierungssignals durch die Steuereinrichtung an die Zugangskontrolleinheit am ersten Zugang, um den ersten Zugang freizugeben und der Person Zutritt zu gewähren.

Ein anderer Aspekt betrifft ein System nach Anspruch 4 zur Kontrolle von Zugängen, das eine Vielzahl von Zugangskontrolleinheiten und eine Steuereinrichtung umfasst. Jedem Zugang ist eine Zugangskontrolleinheit zugewiesen und jeder Zugangskontrolleinheit ist eine Datenerfassungseinrichtung zugeordnet. Die Steuereinrichtung ist durch ein Netzwerk an die Zugangskontrolleinheiten gekoppelt und hat einen Prozessor mit einem im Prozessor ausführbaren Softwareprogram zur Zugangskontrolle. Im Betrieb empfängt der Prozessor ein Fehlersignal, das anzeigt, dass eine erste Datenerfassungseinrichtung an einem ersten Zugang nicht betriebsbereit ist und keine Berechtigungsdaten einer am ersten Zugang Zutritt wünschenden Person erfassen kann. Der Prozessor empfängt ein Datensignal, das von einer zweiten Datenerfassungseinrichtung an einem zweiten Zugang erzeugt wird, wenn die zweite Datenerfassungseinrichtung die Berechtigungsdaten der am ersten Zugang Zutritt wünschenden Person erfasst. Der Prozessor sendet einen Steuerbefehl an die Zugangskontrolleinheit am ersten Zugang, um den ersten Zugang freizugeben und der Person Zutritt zu gewähren.

In einigen der hier beschriebenen Ausführungsbeispiele basiert die Technologie auf mit der Steuereinrichtung vernetzten Zugangskontrolleinheiten. Es kann vorkommen, dass eine Datenerfassungseinrichtung (z. B. ein Lesegerät für RFID Karten) an einem Zugang wegen einem Defekt ausfällt. Versucht eine Person dann an diesem Zugang in gewohnter Weise z. B. ihre Wohnung zu betreten, in dem sie ihre RFID Karte an das Lesegerät hält, bleibt der Zugang verriegelt. Die Technologie erlaubt es dieser Person aber, eine andere Datenerfassungseinrichtung an einem anderen Zugang zu nutzen, um Zugang zu ihrer Wohnung zu bekommen. Dadurch wird Verfügbarkeit des Zugangskontrollsystems verbessert.

In einem Ausführungsbeispiel erfasst die zweite Datenerfassungseinrichtung Berechtigungsdaten der am ersten Zugang Zutritt wünschenden Person. Das Aktivierungssignal wird erzeugt, wenn die erfassten Berechtigungsdaten zum Zutritt am ersten Zugang berechtigen. In einem Ausführungsbeispiel wird dabei auch überprüft, ob ein im Datensignal enthaltener Identifikationscode für den ersten oder zweiten Zugang gültig ist. Das Aktivierungssignals wird erzeugt, wenn der Identifikationscode für den ersten Zugang gültig.

In einem Ausführungsbeispiel kann am ersten Zugang eine Mitteilung angezeigt werden. Diese Mitteilung informiert, dass mindestens die zweite Datenerfassungseinrichtung am zweiten Zugang zum Erfassen der Berechtigungsdaten zur Verfügung steht. Je nach Ausgestaltung kann die Mitteilung auch informieren, dass die erste Datenerfassungseinrichtung ausser Betrieb ist. Die Person wird somit nicht im Unklaren gelassen, welche Alternativen zur Verfügung stehen und warum. Dadurch wird ein hohes Mass an Benutzerfreundlichkeit erzielt.

Die Technologie bietet Flexibilität hinsichtlich der Art und Weise, wie die Steuereinrichtung Statusinformation erhält. In einem Ausführungsbeispiel fragt die Steuereinrichtung Statusinformation von den Datenerfassungseinrichtungen ab, um daraus mindestens ein Fehlersignal zu ermitteln. In einem anderen Ausführungsbeispiel sendet die erste Datenerfassungseinrichtung ein Fehlersignal an die Steuereinrichtung, z. B. sobald ein Fehler auftritt und die erste Datenerfassungseinrichtung deswegen nicht betriebsbereit ist.

Flexibilität besteht auch hinsichtlich der Implementierung der im System vorhandenen Datenerfassungseinrichtungen. Eine Datenerfassungseinrichtung kann ein Lesegerät umfassen, das Daten von Magnetkarten, Chipkarten oder RFID Karten, Daten von einem optischen Code, der auf einem Trägermaterial oder einer elektronischen Anzeige dargestellt ist, oder biometrische Daten lesen und/oder erfassen kann. Je nach Ausgestaltung können diese Lesegerät-Technologien auch kombiniert werden.

In einem Ausführungsbeispiel können die Zugänge je nach Situation als Türen, Schranken, Drehkreuze und/oder Drehtüren ausgestaltet sein. In derartigen Barrieren können die Zugangskontrolleinheiten elektronische Schlösser umfassen. Diese Barrieren des Zugangskontrollsystems können in einem Gebäude oder einem anderen begrenzten Gebiet angeordnet sein.

In weiteren Ausführungsbeispielen ergibt sich weitere Flexibilität dadurch, dass die Steuereinrichtung in dem Gebäude, in dem das Zugangssystem den Zugang kontrolliert, oder entfernt von diesem Gebäude in einer Servicezentrale angeordnet sein kann. Zudem kann die Steuereinrichtung bzw. deren Funktion innerhalb des Gebäudes verteilt angeordnet sein. Durch die Servicezentrale können beispielsweise Zugangsberechtigungen für das Gebäude zentral verwaltet werden (z. B. durch eine Gebäudeverwaltung). Die Servicezentrale kann auch zeitnah Störfälle erkennen und deren Behebung veranlassen.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation in einem Gebäude mit mehreren Stockwerken und einem Zugangskontrollsystem;
- Fig. 2: eine schematische Darstellung eines ersten Ausführungsbeispiels eines elektronischen Schlosses;
- Fig. 3: eine schematische Darstellung eines zweiten Ausführungsbeispiels eines elektronischen Schlosses; und
- Fig. 4: eine beispielhafte Darstellung eines Verfahrens zur Zugangskontrolle anhand eines schematischen Ablaufdiagramms.

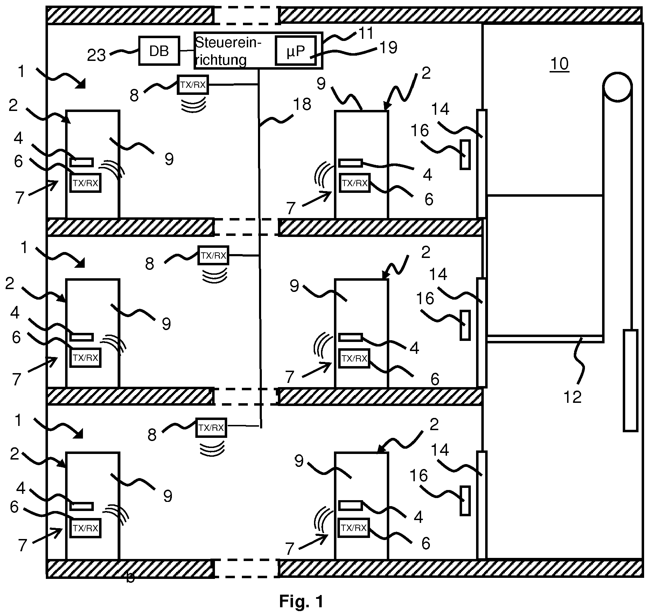

Fig. 1 ist eine schematische Darstellung einer beispielhaften Situation in einem Gebäude, das mit einem Zugangskontrollsystem ausgestattet ist und mehrere Stockwerke 1 hat, die von einer Aufzugsanlage 10 bedient werden. Aus Darstellungsgründen ist in Fig. 1 von der Aufzugsanlage 10 nur eine in einem Schacht verfahrbare Kabine 12 gezeigt, die durch auf den Stockwerken 1 angeordnete Terminals 16 gerufen werden kann. Der Schacht ist auf jedem Stockwerk 1 in bekannter Weise durch eine Schachttür 14 abgetrennt. Auf jedem Stockwerk 1 sind mehrere Zugänge 2 (z. B. Türen 9, die ein Türblatt und eine Türzarge/Türrahmen umfassen) gezeigt, die beispielsweise Zutritt zu Wohnungen, Büroräumen oder anderen zugangsbeschränkten Zonen oder Räumen ermöglichen. Der Fachmann erkennt, dass ein Zugang 2 auch einer von evtl. mehreren Gebäudezugängen, Garageneinfahrten und/oder Grundstückszugängen/-fahrten sein kann.

In Fig. 1 ist an jedem Zugang 2 eine Zugangskontrolleinheit 7 vorhanden. Im gezeigten Ausführungsbeispiel ist jede Tür 9 mit einem Türgriff 4 und einer Datenerfassungseinrichtung 6 ausgestattet, wobei die Datenerfassungseinrichtung 6 der Zugangskontrolleinheit 7 zugeordnet ist und Daten von einer Person oder einem Datenträger erfasst, wenn die Person an einem Zugang 2 Einlass wünscht. In einem Ausführungsbeispiel können Zugangskontrolleinheiten 7 oder Datenerfassungseinrichtungen 6 auch an den Terminals 16 angeordnet sein. Die Zugangskontrolleinheiten 7 sind über ein Netzwerk an eine Steuereinrichtung 11 gekoppelt. Die Steuereinrichtung 11 kann beispielsweise Zugangsberechtigungen überprüfen und, wenn eine Person zum Zutritt berechtigt ist, z. B. die jeweilige Tür 9 entriegeln, um der Person Einlass zu gewähren. Alternativ dazu kann eine Überprüfung einer Zugangsberechtigung auch lokal in den Zugangskontrolleinheiten 7 erfolgen.

In der in Fig. 1 gezeigten Situation ist die hier beschriebene Technologie in vorteilhafter Weise anwendbar. Kurz und beispielhaft zusammengefasst kann die Steuereinrichtung 11 eine bestimmte (erste) Tür 9 für eine Person direkt entriegeln oder deren Entriegelung veranlassen und zwar auch dann, wenn beispielsweise die Datenerfassungseinrichtung 6 an dieser (ersten) Tür 9 nicht betriebsbereit ist, beispielsweise wegen einem Defekt, und Daten für eine Berechtigungsprüfung nicht erfassen kann. Liegt für diese (erste) Tür 9 ein Fehlersignal vor, kann an der Tür 9 oder der (defekten) Datenerfassungseinrichtung 6 beispielsweise ein Hinweis vorhanden sein, dass eine oder mehrere Datenerfassungseinrichtungen 6 in der Nähe zur Verfügung stehen, um an dieser (ersten) Tür 9 Zugang zu bekommen. Diese Datenerfassungseinrichtungen 6 können zu einer oder mehreren Türen 9 oder den Terminals 16 gehören. Der genannte Hinweis kann beispielsweise in der Art "Bitte nutzen Sie die Datenerfassungseinrichtung der Tür X oder das Aufzugsterminal auf diesem Stockwerk" sein.

Die Person kann dann eine Datenerfassungseinrichtung 6 dieser (zweiten) Türen 9 oder Terminals 16 verwenden, um ihre Berechtigungsdaten erfassen zu lassen. Wenn die Person dann z. B. ihre RFID Karte an der Datenerfassungseinrichtung 6 der zweiten Tür 9 präsentiert, erkennt die Steuereinrichtung 11, dass die Person an der zweiten Tür 9 u. U. keinen Zugang hat, und prüft, ob in einem Datenspeicher gespeicherte Statusinformation auf einen Störungsfall hinweist und an welcher (ersten) Tür 9 die Datenerfassungseinrichtung 6 evtl. defekt ist. Bei bestehender Zutrittsberechtigung für die (erste) Tür 9, an der die Datenerfassungseinrichtung 6 defekt ist, steuert die Steuereinrichtung 11 eine Entriegelungsvorrichtung an dieser (ersten) Tür 9 an, um diese für die Person frei zu geben. Weitere strukturelle und funktionelle Details sind im Folgenden beschrieben.

In ähnlicher Weise ist die beschriebene Technologie auch dann anwendbar, wenn keine Datenerfassungseinrichtungen 6 an den Türen 9 angeordnet sind. Dies kann beispielsweise in einem Gebäude der Fall sein, in dem aus Kostengründen auf derartige Datenerfassungseinrichtungen 6 an den einzelnen Türen 9 verzichtet wird, den Bewohnern aber trotzdem die Funktion einer Zugangskontrolle geboten werden soll. In einem solchen Gebäude sind die Aufzugsterminals mit Datenerfassungseinrichtungen ausgestattet, die die Bewohner nutzen können, um Zugang zu ihren Wohnungen zu erhalten. Beispielsweise kann ein Bewohner seine RFID Karte an eine Datenerfassungseinrichtung an einem Aufzugterminal halten, um seine Wohnungstür zu öffnen. In einer Ausgestaltung kann der Bewohner auch aufgefordert werden, einzugeben, welche Tür zu öffnen ist. Die Aufforderung zur Eingabe kann durch eine Anzeige auf einem Display eines Userinterfaces erfolgen, und die Tür kann durch eine Wohnungsnummer oder einen Namen identifiziert werden. Hält der Bewohner nach dieser Eingabe seine RFID Karte an die Datenerfassungseinrichtung, wird die Eingabe bestätigt und, bei bestehender Berechtigung, die gewünschte Tür geöffnet. In dieser Ausgestaltung kann verhindert werden, dass, sollte der Bewohner Zutritt zu mehreren Türen oder Wohnungen haben, mehrere Türen auf einmal geöffnet werden.

Erneut Bezug nehmend auf Fig. 1, ist in einem Ausführungsbeispiel die Zugangskontrolleinheit 7 ein elektronisches Türschloss, das am Türblatt der Tür 9 angeordnet ist. Die zum Betrieb des elektronischen Türschlosses erforderliche elektrische Energie kann beispielsweise durch eine interne Batterie oder einen Anschluss an eine externe Stromversorgung (z. B. ein gebäudeinternes Stromnetz) zur Verfügung gestellt werden. Die Datenerfassungseinrichtung 6 kann ein Lesegerät umfassen, das Daten basierend auf unterschiedlichen Technologien erfassen kann. Das Lesegerät kann beispielsweise Daten von Magnetkarten, Chipkarten oder RFID Karten lesen, oder Daten von optischen Codes (Barcodes, QR Codes, Farbcodes), die auf verschiedenen Trägermaterialien aufgedruckt sind oder auf Anzeigen von elektronischen Geräten (z. B. Mobiltelefone, Smartphone, Tablet) dargestellt werden, erfassen. Das Lesegerät kann in einem anderen Ausführungsbeispiel ein Lesegerät zum Erkennen von biometrischen Parametern (z. B. Muster von Fingerkuppen, Handflächen oder Augen (Iris), oder Charakteristika von Stimmen) umfassen.

Kommt beispielsweise die Radio Frequency Identification (RFID) Technologie zur Anwendung, ist das Lesegerät ein RFID Leser, der Daten von einer in Funkreichweite platzierten RFID Karte empfängt. Die Daten, beispielsweise einen Identifikationscode umfassend, sind in einem Datenspeicher der RFID Karte gespeichert. Die vom RFID Leser und der RFID Karte verwendete Funkfrequenz beträgt beispielsweise 125 kHz, 13,56 MHz oder 2,45 GHz. Kommt dagegen eine optische Technologie zur Anwendung, ist das Lesegerät ein optisches Lesegerät (z. B. eine Kamera oder ein Scanner), das das Muster eines optischen Codes, der auf einem elektronischen Gerät angezeigt wird, erfasst. Eine beispielhafte Technologie zum Erzeugen und Erfassen eines optischen Farbcodes ist in WO 2015/049186 beschrieben. Die genannten Karten und elektronischen Geräte werden im Folgenden als Träger für elektronische Schlüssel oder Schlüsselträger bezeichnet. Wünscht eine Person an einer Tür 9 Zugang, bringt sie den Schlüsselträger beispielsweise in Funkreichweite, die abhängig von der verwendeten Funktechnologie ist, oder positioniert ihn vor einem optischen Lesegerät.

Im in Fig. 1 gezeigten Ausführungsbeispiel ermöglichen die Türen 9 Zugang zu den Wohnungen, Büros oder anderen zugangsbeschränkten Zonen. Der Fachmann erkennt, dass in anderen Ausführungsbeispielen Schranken, Drehkreuze, Drehtüren oder andere Barrieren verwendet werden können, um an einem Zugangspunkt den Zugang zu gewähren oder zu blockieren. In weiteren Ausführungsbeispielen können solche Barrieren durch elektronische Überwachungseinrichtungen, beispielsweise Lichtschranken, Bewegungsmelder oder optische Einrichtungen (3D Kameras, Videokameras) ergänzt oder ersetzt werden. Je nach Gebäude können derartige Alternativen auch in Kombination verwendet werden.

Im Folgenden erfolgt die Beschreibung von verschiedenen Ausführungsbeispielen anhand einer Tür 9 mit einer Zugangskontrolleinheit 7; der Fachmann erkennt, dass anstelle der Tür 9 eine oder mehrere der genannten Alternativen verwendet werden können. Der Fachmann erkennt auch, dass die Zugangskontrolleinheit 7 und/oder ihre Datenerfassungseinrichtung 6 beispielsweise an oder in der Nähe der Türen 9, Schranken, Drehkreuze, Drehtüren oder anderen Barrieren angeordnet sein können. Die Zugangskontrolleinheit 7 und/oder die Datenerfassungseinrichtung 6 können auch in oder an dem Terminal 16, das zum Rufen eines Aufzugs dient, angeordnet sein. Erkennt die Datenerfassungseinrichtung 6 eine berechtigte Person, wird die Tür 9 oder eine der genannten Alternativen entriegelt, beispielsweise durch Aktivierung einer Entriegelungsvorrichtung, so dass die Tür 9 geöffnet und Zutritt gewährt werden kann. Die Entriegelungsvorrichtung kann beispielsweise in oder an der Tür 9 vorhanden sein und eine Türfalle und/oder einen Riegel umfassen, die, wenn die Tür 9 geschlossen ist, in ein Schliessblech einer Türzarge greifen. Die Entriegelungsvorrichtung kann auch ganz oder teilweise in der Türzarge angeordnet sein.

Fig. 1 zeigt ausserdem die Steuereinrichtung 11, in der ein Prozessor 19 (µP) angeordnet ist, und mehrere Kommunikationseinrichtungen 8, die an die Steuereinrichtung 11 gekoppelt sind. Eine gezeigte Datenbank 23 (DB) ist an die Steuereinrichtung 11 gekoppelt; die Datenbank 23 kann auch in der Steuereinrichtung 11 angeordnet sein. Im gezeigten Ausführungsbeispiel ist auf jedem Stockwerk 1 eine Kommunikationseinrichtung 8 gezeigt, wobei jede Kommunikationseinrichtung 8 über einen (leitungsgebundenen) Datenbus 18 mit der Steuereinrichtung 11 verbunden ist. Die Kommunikation zwischen der Steuereinrichtung 11 und den einzelnen Kommunikationseinrichtungen 8 erfolgt in einem solchen Festnetz gemäss einem Protokoll für leitungsgebundene Kommunikation über den Datenbus 18, beispielsweise das LonTalk-Protokoll, wenn der Datenbus 18 auf dem LON Standard beruht (LON: Lokal Operating Network). Der Fachmann erkennt ausserdem, dass alternativ zu einem Bus jede Kommunikationseinrichtung 8 über eine separate Leitung mit der Steuereinrichtung 11 verbunden sein kann.

In einem anderen Ausführungsbeispiel kann die Kommunikation über ein Funknetz erfolgen. In diesem Fall sind die Steuereinrichtung 11 und die Kommunikationseinrichtungen 8 mit entsprechenden Funksendern und Funkempfängern ausgestattet. Bekannte Funknetze sind beispielsweise ZigBee nach dem Standard IEEE 802.15.4, Wireless Local Area Network (WLAN) nach dem Standard IEEE802.11, Worldwide Interoperability for Microwave Access (WIMAX) nach dem Standard IEEE802.16 mit einer Reichweite von mehreren 100 Metern bis zu mehreren 10 Kilometern. Die vom Funknetz verwendete Funkfrequenz liegt bei einem WLAN beispielsweise im 2.4 GHz-Band oder im 5.0 GHz-Band und bei WIMAX im 10 bis 66 GHz-Band. Sowohl das Festnetz als auch das Funknetz erlauben eine bidirektionale Kommunikation gemäss bekannten Netzwerk-Protokollen wie das Transmission Control Protocol / Internet-Protocol (TCP/IP) oder Internet Packet Exchange (IPX).

In Fig. 1 ist die Steuereinrichtung 11 im Gebäude installiert. Der Fachmann erkennt, dass die Steuereinrichtung 11 auch ausserhalb des Gebäudes, beispielsweise in einer entfernt angeordneten Servicezentrale installiert sein kann. In einem solchen Fall erfolgt die Kommunikation zwischen der Steuereinrichtung 11 und verschiedenen Einheiten und Vorrichtungen im Gebäude über ein Kommunikationsnetzwerk (z. B. das Internet und/oder ein WAN).

Die Kommunikationseinrichtungen 8 können nicht nur mit der Steuereinrichtung 11 kommunizieren, sondern auch mit den Zugangskontrolleinheiten 7, beispielsweise mit deren Datenerfassungseinrichtungen 6. In einem Ausführungsbeispiel erfolgt die Kommunikation per Funk, was in Fig. 1 durch ein Symbol für Funkwellen angedeutet ist. Auch diese Funkkommunikation kann auf einem der genannten Standards für Funknetze erfolgen. Eine Kommunikation per Funk ist insbesondere dann von Vorteil, wenn die Datenerfassungseinrichtung 6 an einem beweglichen Türblatt angebracht ist und dort das Verlegen von Leitungen unter Umständen mit höherem Aufwand verbunden ist. In einem Ausführungsbeispiel hat jede Zugangskontrolleinheit 7 einen Funksender und Funkempfänger, die mit entsprechend ausgestatteten Kommunikationseinrichtungen 8 kommunizieren. In einem anderen Ausführungsbeispiel kann die Kommunikation zwischen den Kommunikationseinrichtungen 8 und den Zugangskontrolleinheiten 7 auch leitungsgebunden erfolgen.

Unabhängig davon, wie die Kommunikation zwischen den Zugangskontrolleinheiten 7 und den Kommunikationseinrichtungen 8 bzw. der Steuereinrichtung 11 erfolgt, d. h. per Funk oder über Leitungen, ist jede Zugangskontrolleinheiten 7 im Gebäude identifizierbar, beispielsweise aufgrund fest verdrahteter Anschlussleitungen (z. B. über einen festgelegten Anschluss an der Steuereinrichtung 11) oder durch eine individuelle Adresse oder Kennung. Die Steuereinrichtung 11 kann dadurch beispielsweise bei Empfang eines entsprechenden Signals erkennen, an welcher Tür 9 momentan Einlass gewünscht wird oder welche nach einer erfolgten Überprüfung der Zugangsberechtigung zu öffnen ist.

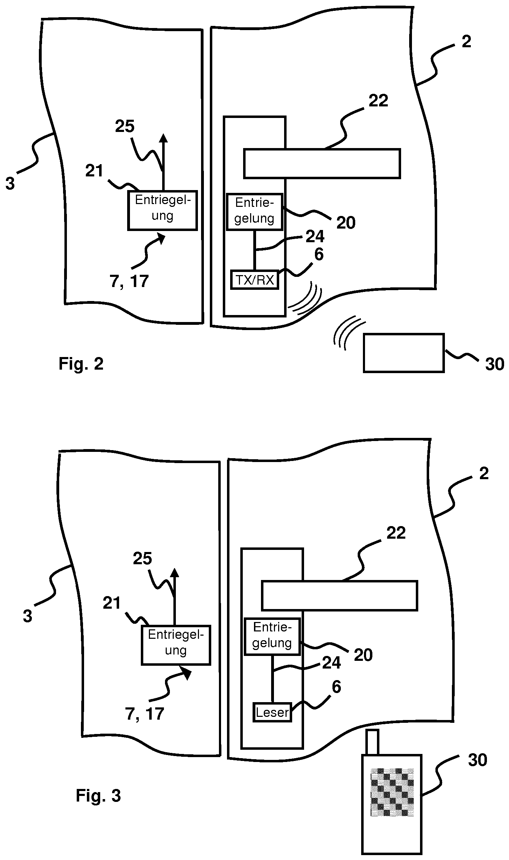

Fig. 2 zeigt ein Ausführungsbeispiel einer Zugangskontrolleinheit 7, insbesondere eines elektronischen Schlosses 17 mit einem Drücker 22, wie es an den Türen 9 eingesetzt werden kann. Der Fachmann erkennt, dass anstelle des Drückers 22 auch eine andere Griffmöglichkeit, beispielsweise ein Türknauf, vorhanden sein kann, um die Tür 9 zu öffnen. Aus Darstellungsgründen sind ein evtl. vorhandenes Schliessblech und eine Türfalle nicht gezeigt.

Türblattseitig zeigt Fig. 2 ausserdem die Datenerfassungseinrichtung 6 und eine Entriegelungsvorrichtung 20, die über eine Verbindung 24 an die Datenerfassungseinrichtung 6 gekoppelt ist. Die Datenerfassungseinrichtung 6 ist für eine Kommunikation mit einem Schlüsselträger 30 basierend auf einer der oben genannten Funktechnologien, z. B. der RFID Technologie, vorgesehen. Die Datenerfassungseinrichtung 6 hat dafür einen Sender und Empfänger (TX/RX) und der Schlüsselträger 30 einen Transponder gemäss der RFID Technologie.

Fig. 3 zeigt ein weiteres Ausführungsbeispiel eines elektronischen Schlosses 7, bei dem die Datenerfassungseinrichtung 6 im Vergleich zum Ausführungsbeispiel der Fig. 2 ein Lesegerät (Leser) aufweist, das einen optischen Code vom Schlüsselträger 30 lesen kann. Der Schlüsselträger 30 kann beispielsweise ein Smartphone sein, das ein in Fig. 3 schematisch angedeutetes Codemuster auf einem Display anzeigt.

Die Figuren 2 und 3 zeigen zusätzlich zu einem Türblattteil der Tür 9 einen Teil einer Türzarge 3, die beispielsweise in eine Gebäudewand integriert ist und eine Entriegelungsvorrichtung 21 enthält. Die Entriegelungsvorrichtung 21 ist optional, denn je nach Ausgestaltung des elektronischen Türschlosses 7 kann die Türzage 3 oder das Türblatt der Tür 9 eine Entriegelungsvorrichtung (20, 21) enthalten. Wenn die Entriegelungsvorrichtung 21 vorhanden ist, kann die Entriegelungsvorrichtung 21 über eine Verbindungsleitung 25 aktiviert werden.

Der Fachmann erkennt, dass die Entriegelungsvorrichtung 20 mit der Datenerfassungseinrichtung 6 zu einer Einheit zusammengefasst sein kann. Der Fachmann erkennt ausserdem, dass die Datenerfassungseinrichtung 6 auch an oder in der Nähe der Türzarge 3 angeordnet sein kann. Ist die Datenerfassungseinrichtung 6 an der Türzarge 3 angeordnet, kann auch sie mit der Entriegelungsvorrichtung 21 zu einer Einheit zusammengefasst sein.

Die Entriegelungsvorrichtungen 20, 21 haben einen elektromechanischen Mechanismus, der in einem Ausführungsbeispiel eine elektromagnetisch aktivierbare Sperre oder einen elektromagnetisch aktivierbaren Riegel oder Bolzen enthält. Der elektromechanische Mechanismus kann in einem anderen Ausführungsbeispiel einen Elektromotor umfassen, der einen Riegel oder Bolzen antreibt. Der Elektromotor kann beispielsweise den Bolzen in das Schliessblech der Türzarge 3 hineinschieben und aus diesem herausziehen. Der elektromechanische Mechanismus kann durch ein Steuersignal (im Folgenden auch als Aktivierungssignal bezeichnet) aktiviert werden, das beispielsweise die Datenerfassungseinrichtung 6 oder die Steuereinrichtung 11 erzeugt.

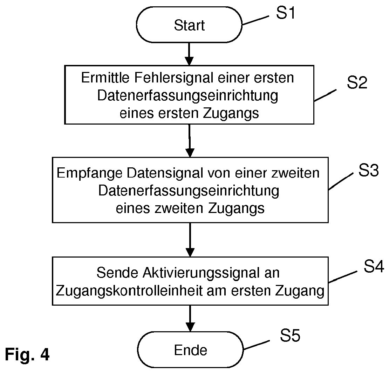

Mit dem Verständnis der oben beschriebenen prinzipiellen Systemkomponenten und deren Funktionalitäten, erfolgt im Folgenden eine Beschreibung eines beispielhaften Verfahrens zum Betreiben eines Systems zur Kontrolle der Zugänge 2 anhand von Fig. 4. Die Beschreibung erfolgt mit Bezug auf eine Person, die an einem Zugang 2 Zutritt wünscht, beispielsweise zu ihrer Wohnung.

Um sich in dem Ausführungsbeispiel gemäss Fig. 4 als für den Zugang 2 berechtigte Person auszuweisen, hält sie einen der oben genannten Schlüsselträger 30 an das elektronische Schloss 17 ihrer (Wohnungs-)Tür 9. Das beispielhafte Verfahren wird vom Prozessor 19 der Steuereinrichtung 11, in dem ein dafür vorgesehenes Softwareprogramm ausgeführt wird, gesteuert. Das Verfahren beginnt in einem Schritt S1 und endet in einem Schritt S5.

In einem Schritt S2 ermittelt der Prozessor 19 der Steuereinrichtung 11 ein Fehlersignal einer Datenerfassungseinrichtung 6, die an einem Zugang 2 angeordnet ist und wegen einem Defekt nicht betriebsbereit ist. Diese defekte Datenerfassungseinrichtung 6 ist im Folgenden als erste Datenerfassungseinrichtung 6 bezeichnet, und der zugeordnete Zugang 2 ist als erster Zugang 2 bezeichnet. Das Fehlersignal zeigt an, dass die erste Datenerfassungseinrichtung 6 am ersten Zugang 2 nicht betriebsbereit ist und keine Berechtigungsdaten einer am ersten Zugang 2 Zutritt wünschenden Person erfassen kann. In dem hier beschriebenen Ausführungsbeispiel wird davon ausgegangen, dass andere Komponenten der Zugangskontrolleinrichtung 7 bzw. des elektronischen Schlosses 17 funktionsfähig sind.

In einem Ausführungsbeispiel kann der Prozessor 19 von den Datenerfassungseinrichtungen 6 in regelmässigen Abständen Statusinformationen abfragen. Bleibt die Statusinformation einer Datenerfassungseinrichtung 6 aus, wird dies als ein Fehlersignal gedeutet und die betroffene Datenerfassungseinrichtung 6 wird als nicht betriebsfähig eingestuft. In einem anderen Ausführungsbeispiel kann jede Zugangskontrolleinrichtung 7 bzw. jedes elektronische Schloss 17 den Zustand der ihr zugeordneten Datenerfassungseinrichtung 6 ermitteln und im Störungsfall ein Fehlersignal an die Steuereinrichtung 11 senden.

Hält die Person während eines solchen Störungsfalls ihren Schlüsselträger 30 an die erste Datenerfassungseinrichtung 6, werden die Berechtigungsdaten nicht erfasst und der Zugang 2 bleibt verschlossen. Ist die erste Datenerfassungseinrichtung 6 nicht betriebsbereit, kann dies an der ersten Datenerfassungseinrichtung 6 oder am elektronischen Schloss 17 angezeigt werden. Eine Anzeigeeinrichtung kann beispielsweise ein Symbol, Text (z. B. "Ausser Betrieb") und/oder Lichtsignale darstellen. Je nach Ausführungsbeispiel kann die Anzeigeeinrichtung ausserdem eine Mitteilung anzeigen, die die Person darüber informiert, dass eine oder mehrere Datenerfassungseinrichtungen 6 in der Nähe benutzt werden können, um an diesem ersten Zugang 2 Zutritt zu erhalten. Eine solche Mitteilung kann unter Umständen entfallen, wenn die Person bereits mit dem Vorgehen in einem solchen Störungsfall vertraut ist.

Folgt die Person der Aufforderung, eine Datenerfassungseinrichtung 6 in der Nähe zu benutzen, hält sie ihren Schlüsselträger 30 an eine zweite Datenerfassungseinrichtung 6 an einem zweiten Zugang 2. Je nach Anzahl der in der Nähe angeordneten Datenerfassungseinrichtungen 6 kann die Person evtl. eine aus mehreren Möglichkeiten auswählen. Die Datenerfassungseinrichtung 6 erfasst vom Schlüsselträger 30 Berechtigungsdaten, beispielsweise einen Identifikationscode, die in einem Ausführungsbeispiel nur für den ersten Zugang 2 gültig sind, nicht aber für den zweiten Zugang 2.

In einem Schritt S3 empfängt der Prozessor 19 daraufhin ein Datensignal, das von der zweiten Datenerfassungseinrichtung 6 am zweiten Zugang 2 erzeugt wird. Das Datensignal wird erzeugt, wenn die zweite Datenerfassungseinrichtung 6 die Berechtigungsdaten der am ersten Zugang 2 Zutritt wünschenden Person erfasst. Das Datensignal umfasst in einem Ausführungsbeispiel den vom Schlüsselträger 30 erfassten Identifikationscode.

Die Steuereinrichtung 11 überprüft, ob der Identifikationscode für den zweiten Zugang 2 gültig ist. Der Identifikationscode ist für den zweiten Zugang 2 dann gültig, wenn er in der Datenbank 23 dem zweiten Zugang 2 zugeordnet ist. In der Datenbank 23 kann beispielsweise für jeden Zugang 2 ein Datensatz (Profil) angelegt sein. Ein solcher Datensatz kann z. B. den Namen einer berechtigten Person und den ihr zugeordneten Identifikationscode umfassen. Einem Zugang 2 können auch mehrere berechtigte Personen zugeordnet werden.

Im hier beschriebenen Fall ist der Identifikationscode für den zweiten Zugang 2 nicht gültig und der zweite Zugang 2 bleibt für die Person verschlossen. Wegen des in Schritt S2 erkannten Störungsfalls am ersten Zugang 2 prüft die Steuereinrichtung 11 ausserdem, ob der Identifikationscode für den ersten Zugang 2 gültig ist, d. h. er muss in der Datenbank dem ersten Zugang 2 zugeordnet sein. Wenn dies der Fall ist, schreitet das Verfahren zu einem Schritt S4. Andernfalls wird keiner der Zugänge 2 für die Person freigegeben und das Verfahren endet.

Im Schritt S4 sendet die Steuereinrichtung 11 ein Aktivierungssignals an die Zugangskontrolleinheit 7 bzw. das elektronische Schloss 17 am ersten Zugang, um den ersten Zugang 2 der Person zum Zutritt freizugeben. Die Steuereinrichtung 11 erzeugt das Aktivierungssignal, wenn der in Verbindung mit Schritt S3 überprüfte Identifikationscode für den ersten Zugang 2 gültig ist. Das Aktivierungssignal steuert die in Fig. 2 und Fig. 3 gezeigte Entriegelungsvorrichtung 20, 21 an, die daraufhin die Verriegelung des elektronischen Schlosses 17 freigibt.

## Patentansprüche

1. Verfahren zum Betreiben eines Systems zur Kontrolle von Zugängen (2), das eine Vielzahl von Zugangskontrolleinheiten (7) umfasst, wobei jedem Zugang (2) eine Zugangskontrolleinheit (7) mit einer ihr zugeordneten Datenerfassungseinrichtung (6) zugewiesen ist, und wobei die Zugangskontrolleinheiten (7) über ein Netzwerk an eine Steuereinrichtung (11) gekoppelt sind, umfassend:
Ermitteln eines Fehlersignals durch die Steuereinrichtung (11), wobei das Fehlersignal anzeigt, dass eine erste Datenerfassungseinrichtung (6) an einem ersten Zugang (2) nicht betriebsbereit ist und keine Berechtigungsdaten einer am ersten Zugang (2) Zutritt wünschenden Person erfassen kann;
Anzeigen einer Mitteilung am ersten Zugang (2), dass mindestens eine zweite Datenerfassungseinrichtung (6) an einem zweiten Zugang (2) zum Erfassen der Berechtigungsdaten der am ersten Zugang (2) Zutritt wünschenden Person zur Verfügung steht;
Empfangen eines Datensignals durch die Steuereinrichtung (11), wobei das Datensignal von der zweiten Datenerfassungseinrichtung (6) am zweiten Zugang (2) erzeugt wird, wenn die zweite Datenerfassungseinrichtung (6) die Berechtigungsdaten der am ersten Zugang (2) Zutritt wünschenden Person erfasst;
Überprüfen eines im Datensignal enthaltenen Identifikationscodes, ob dieser für den ersten oder zweiten Zugang (2) gültig ist, und Erzeugen eines Aktivierungssignals, wenn der Identifikationscode für den ersten Zugang (2) gültig ist; und
Senden des Aktivierungssignals durch die Steuereinrichtung (11) an die Zugangskontrolleinheit (7) am ersten Zugang (2), um den ersten Zugang (2) freizugeben und der Person Zutritt zu gewähren.

2. Verfahren nach Anspruch 1, ausserdem umfassend Abfragen von Statusinformation von den Datenerfassungseinrichtungen (6) durch die Steuereinrichtung (11), um daraus mindestens ein Fehlersignal zu ermitteln.

3. Verfahren nach Anspruch 1, ausserdem umfassend Senden des Fehlersignals durch die erste Datenerfassungseinrichtung (6) am ersten Zugang (2), wenn die erste Datenerfassungseinrichtung (6) nicht betriebsbereit ist.

4. System zur Kontrolle von Zugängen (2), umfassend:
eine Vielzahl von Zugangskontrolleinheiten (7), wobei jedem Zugang (2) eine Zugangskontrolleinheit (7) zugewiesen ist und wobei jeder Zugangskontrolleinheit (7) eine Datenerfassungseinrichtung (6) zugeordnet ist; und
eine Steuereinrichtung (11), die durch ein Netzwerk an die Zugangskontrolleinheiten (7) gekoppelt ist und einen Prozessor (19) mit einem im Prozessor (19) ausführbaren Softwareprogram zur Zugangskontrolle umfasst, wobei der Prozessor (19) im Betrieb
ein Fehlersignal empfängt, das anzeigt, dass eine erste Datenerfassungseinrichtung (6) an einem ersten Zugang (2) nicht betriebsbereit ist und keine Berechtigungsdaten einer am ersten Zugang (2) Zutritt wünschenden Person erfassen kann, wobei am ersten Zugang (2) eine Mitteilung anzeigt, dass mindestens eine zweite Datenerfassungseinrichtung (6) an einem zweiten Zugang (2) zum Erfassen der Berechtigungsdaten der am ersten Zugang (2) Zutritt wünschenden Person zur Verfügung steht,
ein Datensignal empfängt, das von der zweiten Datenerfassungseinrichtung (6) am zweiten Zugang (2) erzeugt wird, wenn die zweite Datenerfassungseinrichtung (6) die Berechtigungsdaten der am ersten Zugang (2) Zutritt wünschenden Person erfasst,
einen im Datensignal enthaltenen Identifikationscode überprüft, ob dieser für den ersten oder zweiten Zugang (2) gültig ist, und einen Steuerbefehl erzeugt, wenn der Identifikationscode für den ersten Zugang (2) gültig ist, und
den Steuerbefehl an die Zugangskontrolleinheit (7) am ersten Zugang (2) sendet, um den ersten Zugang freizugeben und der Person Zutritt zu gewähren.

5. System nach Anspruch 4, bei dem eine Zugangskontrolleinheit (7) ein elektronisches Schloss umfasst.

6. System nach einem der Ansprüche 4 - 5, bei dem eine Datenerfassungseinrichtung (6) ein Lesegerät umfasst, wobei das Lesegerät dafür vorgesehen ist, Daten von Magnetkarten, Chipkarten oder RFID Karten zu lesen, Daten von einem optischen Code, der auf einem Trägermaterial oder einer elektronischen Anzeige dargestellt ist, zu erfassen oder biometrische Daten zu erfassen.

7. System nach einem der Ansprüche 4 - 6, ausserdem umfassend eine Datenbank (23), die mit dem Prozessor (19) kommunikativ gekoppelt ist und mindestens einen Datensatz umfasst, in dem einem Zugang (2) eine Zugangsberechtigung zugeordnet ist.

8. System nach einem der Ansprüche 4 - 7, bei dem die Zugänge (2) als Türen (9), Schranken, Drehkreuze und/oder Drehtüren ausgestaltet sind.

9. System nach Anspruch 8, bei dem die Türen (9), Schranken, Drehkreuze und/oder Drehtüren in einem Gebäude angeordnet sind, und bei dem die Steuereinrichtung (11) in dem Gebäude angeordnet ist.

10. System nach Anspruch 8, bei dem die Türen (9), Schranken, Drehkreuze und/oder Drehtüren in einem Gebäude angeordnet sind, und bei dem die Steuereinrichtung (11) entfernt vom Gebäude in einer Servicezentrale angeordnet ist.

## Claims

1. A method for operating a system for the control of entrances (2) that comprises a plurality of access control units (7), wherein each entrance (2) is allocated an access control unit (7) with a data acquisition device (6) assigned to it and wherein the access control units (7) are coupled to a control device (11) via a network, comprising:
detection of an error signal by the control device (11), wherein the error signal indicates that a first data acquisition device (6) at a first entrance (2) is not ready for operation and is unable to capture authorization data of a person wishing to gain access at the first entrance (2);
display of a message at the first entrance (2) to the effect that at least a second data acquisition device (6) is available at a second entrance (2) for capturing the authorization data of the person wishing to gain access at the first entrance (2);
reception of a data signal by the control device (11), wherein the data signal is produced by the second data acquisition device (6) at the second entrance (2), when the second data acquisition device (6) captures the authorization data of the person wishing to gain access at the first entrance (2);
checking of an identification code contained in the data signal as to whether it is valid for the first or second entrance (2), and generation of an activation signal if the identification code is valid for the first entrance (2); and
transmission of the activation signal by the control device (11) to the access control unit (7) at the first entrance (2), in order to release the first entrance (2) and grant the person access.

2. The method according to Claim 1, moreover comprising the requesting of status information from the data acquisition devices (6) by the control device (11), in order to determine at least one error signal therefrom.

3. The method according to Claim 1, moreover comprising the transmission of the error signal by the first data transmission device (6) at the first entrance (2) when the first data acquisition device (6) is not ready for operation.

4. A system for controlling entrances (2), comprising:
a plurality of access control units (7), wherein each entrance (2) is allocated an access control unit (7) and wherein each access control unit (7) is assigned a data acquisition device (6); and
a control device (11) which is coupled to the access control units (7) by a network and comprises a processor (19) with a software program for access control that can be run in the processor (19), wherein during operation the processor (19)
receives an error signal that indicates that a first data acquisition device (6) at a first entrance (2) is not ready for operation and cannot capture any authorization data of a person wishing to gain access at the first entrance (2), wherein at the first entrance (2) a message indicates that at least a second data acquisition device (6) is available at a second entrance (2) for capturing the authorization data of the person wishing to gain access at the first entrance (2),
receives a data signal that is generated by the second data acquisition device (6) at the second entrance (2) when the second data acquisition device (6) captures the authorization data of the person wishing to gain access at the first entrance (2),
checks an identification code contained in the data signal as to whether it is valid for the first or second entrance (2), and generates a control command if the identification code is valid for the first entrance (2), and
sends the control command to the access control unit (7) at the first entrance (2), in order to release the first entrance and grant the person access.

5. The system according to Claim 4, in which an access control unit (7) comprises an electronic lock.

6. The system according to one of Claims 4 - 5, in which a data acquisition device (6) comprises a reading device, wherein the reading device is provided to read data from magnetic cards, chip cards or RFID cards, to capture data from an optical code which is presented on a carrier material or an electronic display or to capture biometric data.

7. The system according to one of Claims 4 - 6, moreover comprising a database (23) which is communicatively coupled to the processor (19) and comprises at least one data set in which an access authorization is assigned to an entrance (2).

8. The system according to one of Claims 4 - 7, in which the entrances (2) are configured as doors (9), barriers, turnstiles and/or revolving doors.

9. The system according to Claim 8, in which the doors (9), barriers, turnstiles and/or revolving doors are arranged in a building and in which the control device (11) is arranged in the building.

10. The system according to Claim 8, in which the doors (9), barriers, turnstiles and/or revolving doors are arranged in a building and in which the control device (11) is arranged remote from the building in a service centre.

## Revendications

1. Procédé opérationnel d'un système destiné à contrôler des accès (2), qui comprend une pluralité d'unités de contrôle d'accès (7), à chaque accès (2) étant affectée une unité de contrôle d'accès (7), dotée d'un dispositif de détection de données (6) qui lui est associé, et les unités de contrôle d'accès (7) étant connectées via un réseau à un dispositif de commande (11), comprenant les étapes consistant dans :
la détermination d'un signal de défaut par le dispositif de commande (11), le signal de défaut indiquant qu'un premier dispositif de détection de données (6) sur un premier accès (2) n'est pas opérationnel et ne peut pas détecter des données d'autorisation d'une personne souhaitant accéder au premier accès (2) ;
l'affichage d'un message sur un premier accès (2), qu'au moins un deuxième dispositif de détection de données (6) est disponible à un deuxième accès (2) pour détecter les données d'autorisation de la personne souhaitant accéder au premier accès (2) ;
la réception d'un signal de données par le dispositif de commande (11), le signal de données étant généré par le deuxième dispositif de détection de données (6) sur le deuxième accès (2), lorsque le deuxième dispositif de détection de données (6) détecte les données d'autorisation de la personne souhaitant accéder au premier accès (2) ;
la vérification d'un code d'identification contenu dans le signal de données, pour vérifier s'il est valable pour le premier ou le deuxième accès (2), et la génération d'un signal d'activation, lorsque le code d'identification (2) est valable pour le premier accès ; et
l'émission par le dispositif de commande (11) du signal d'activation à l'attention de l'unité de contrôle d'accès (7) sur le premier accès (2), pour libérer le premier accès (2) et permettre à la personne d'y accéder.

2. Procédé selon la revendication 1, comprenant par ailleurs l'interrogation par le dispositif de commande (11) d'une information d'état des dispositifs de détection de données (6), pour en déterminer au moins un signal de défaut.

3. Procédé selon la revendication 1, comprenant par ailleurs l'émission du signal de défaut par le premier dispositif de détection de données (6) sur le premier accès (2), lorsque le premier dispositif de détection de données (6) n'est pas opérationnel.

4. Système, destiné à contrôler des accès (2), comprenant :
une pluralité d'unités de contrôle d'accès (7), à chaque accès (2) étant affectée une unité de contrôle d'accès (7) et à chaque unité de contrôle d'accès (7) étant associé un dispositif de détection de données (6) ; et
un dispositif de commande (11), qui via un réseau est connecté aux unités de contrôle d'accès (7) et qui comprend un processeur (19) doté d'un programme logiciel exécutable sur le processeur (19), destiné au contrôle d'accès, en service, le processeur (19)
réceptionnant un signal de défaut qui indique qu'un premier dispositif de détection de données (6) sur un premier accès (2) n'est pas opérationnel et ne peut pas détecter des données d'autorisation d'une personne souhaitant accéder au premier accès (2), sur le premier accès (2), un message indiquant qu'au moins un deuxième dispositif de détection de données (6) est disponible sur un deuxième accès (2), pour détecter des données d'autorisation de la personne souhaitant accéder au premier accès (2),
réceptionnant un signal de données, qui est généré par le deuxième dispositif de détection de données (6) sur le deuxième accès (2), lorsque le deuxième dispositif de détection de données (6) détecte les données d'autorisation de la personne souhaitant accéder au premier accès (2),
vérifiant un code d'identification contenu dans le signal de données, pour vérifier s'il est valable pour le premier ou le deuxième accès (2), et générant un ordre de commande, lorsque le code d'identification est valable pour le premier accès (2), et
envoyant l'ordre de commande à l'attention de l'unité de contrôle d'accès (7) sur le premier accès (2), pour libérer le premier accès et permettre à la personne d'y accéder.

5. Système selon la revendication 4, dans lequel l'unité de contrôle d'accès (7) comprend une serrure électronique.

6. Système selon l'une quelconque des revendications 4 ou 5, dans lequel un dispositif de détection de données (6) comprend un lecteur, le lecteur étant prévu pour lire des données de cartes magnétiques, de cartes à puce ou de cartes RFID, pour détecter des données d'un code optique qui est représenté sur une matière de support ou sur un affichage électronique, ou pour détecter des données biométriques.

7. Système selon l'une quelconque des revendications 4 à 6, comprenant par ailleurs une base de données (23), qui est connectée en communication avec le processeur (19) et qui comprend au moins un jeu de données, dans lequel une autorisation d'accès est associée à un accès (2).

8. Système selon l'une quelconque des revendications 4 à 7, dans lequel les accès (2) sont conçus sous forme de portes (9), de barrières, de tourniquets et/ou de portes à tambour.

9. Système selon la revendication 8, dans lequel les portes (9), les barrières, les tourniquets et/ou les portes à tambour sont placés dans un bâtiment et dans lequel le dispositif de commande (11) est placé dans le bâtiment.

10. Système selon la revendication 8, dans lequel les portes (9), les barrières, les tourniquets et/ou les portes à tambour sont placés dans un bâtiment et dans lequel le dispositif de commande (11) est placé dans une centrale de service, loin du bâtiment.
